# EUROPEAN PATENT SPECIFICATION

(11) **EP 3 265 744 B1**
(45) Date of publication and mention of the grant of the patent: **29.04.2020**
(21) Application number: 16709526.4
(22) Date of filing: 04.03.2016
(51) Int. Cl.: F42B 15/08, F42B 30/00

(54) **ANTI-VIBRATION MOUNTING SYSTEM**
ANTISCHWINGUNGSMONTAGESYSTEM
SYSTÈME DE MONTAGE ANTIVIBRATION

(30) Priority: 05.03.2015 GB 201503729
(43) Date of publication of application: 10.01.2018
(73) Proprietor: Atlantic Inertial Systems Limited, Plymouth, Devon PL6 6DE (GB)
(72) Inventor: THOMAS, Henry James, Plymouth Devon PL7 5DX (GB)
(74) Representative: Dehns
(86) International application number: PCT/GB2016/050568
(87) International publication number: WO 2016/139483

(56) References cited:
- EP-A2- 1 788 277
- WO-A1-2009/142740
- FR-A1- 2 050 235
- US-A1- 2008 217 465
- US-A1- 2009 289 400

## Description

### TECHNICAL FIELD

The present disclosure relates to the mounting of components, in particular electronic components, in projectiles.

### BACKGROUND

It is frequently necessary to protect components, for example electronic components, such as inertial measurement units, from vibration in use, for example when such components are incorporated in projectiles. It has been found that to provide the necessary protection, the components require an anti-vibrational mounting. Such a mounting may comprise very soft materials which may have the disadvantage that they may creep under the weight of the component being supported. The rate of creep will depend on temperature and time. Thus, for example, if a unit is being stored for prolonged periods prior to use and/or at elevated temperatures, the damping material may creep and deform to such an extent that when used, it no longer performs its damping function appropriately.

A mounting system for an electronic component in a housing, having the features of the preamble of claim 1, is disclosed in US2009/0289400 A1.

### SUMMARY

From a first aspect, the invention provides a mounting system for an electronic component in a housing, as set forth in claim 1.

Thus in accordance with this disclosure, the weight of the component is removed from the damping element by means of a separate support. This avoids creep of the damping element. However, the support is selectively releasable from the component such that in use the damping element may only be supported by the damping element, thereby isolating the component from potentially damaging vibration.

In the context of a projectile, such as a munition, the support may be configured such that it is released automatically upon launch or firing of the projectile. This will allow the component to be suitably supported during storage and transportation, but then allow the appropriate vibration damped support for the component during the flight phase of the projectile.

As will be understood, during launch or firing, a projectile will experience high accelerations (for example up to 20,000G) and thus components within the projectile will be subject to high forces. These forces, it has been realised, may be used to effect the release of the support, since the forces will result in the relative movement of the component and the housing.

In accordance with the invention, therefore, the support is collapsible or permanently deformable in response to a predetermined movement of the component relative to the housing.

It has been found that during launch or firing, the forces exerted on and the movement of the component will generally be along the axial direction of the projectile, so in embodiments the support is configured to be deformable or collapsible in an axial direction. However, forces may also be generated in a radial direction or indeed in other directions. Accordingly, the support may be configured in addition, or alternatively, for deformation in a radial or other direction.

It has also been found that during firing or launch the inertial force exerted by and the movement of the component will be in the direction opposite to the launch direction, but that thereafter the component may rebound, thereby creating a force and movement of the component in an opposite direction. Also, the elastic compression of the projectile is released after launch which creates a transient shock condition, also in an opposite direction. In certain embodiments, therefore, the support comprises a first element which is deformable or collapsible in response to movement of the component in a first direction relative to the housing and a second element which is deformable or collapsible in response to movement of the component in a second, opposite direction relative to the housing.

In certain embodiments, the support comprises first and second support elements which are spaced apart, for example axially, along the component, the first support element being collapsible in response to movement of the component in the first direction and the second support element being collapsible in response to movement of the component in the direction. The respective support elements may be arranged at respective ends of the component.

The particular shape and construction of the support elements will depend upon the shape and arrangement of the component. In one embodiment, however, the support element may comprise a plurality of fingers which engage and support the component, but which are plastically deformed upon the movement of the component by the predetermined amount.

The fingers may be configured to be deformed either radially inwardly or outwardly depending on the particular installation. In one embodiment one support element is configured such that the fingers deform radially inwardly and the other support element such that the fingers deform radially outwardly.

The fingers may be mounted to a common base element which is mounted either to the housing or the component, and the fingers may be arranged in a circumferential array around the base element. The particular configuration of the fingers, their number and so on may be chosen to suit the particular material used and the loads applied.

In embodiments, the fingers are arranged in an axisymmetric manner so as to ensure uniform deflection of the fingers.

In one embodiment one support element, for example that at the lower end of the component is mounted to the housing, and the other support element, for example that at the upper end of the component, mounted to the component.

The fingers may have a bent shape with a first, generally axially extending portion for engaging a radially facing surface of the component or the housing, and an inclined portion engaging an axially facing surface or edge, for example an end surface or edge, of the component or housing. Movement of the component relative to the housing will then deflect and thereby plastically deform the inclined portion of the finger, thereby releasing the component from the support element.

The damping element may be provided at any convenient location between the component and the housing. In one embodiment, the damping element is disposed between opposed axially facing surfaces of the housing and the component. In other embodiments, however, the damping element may be arranged between radially facing surfaces of the housing. Respective damping elements may be provided at axially spaced locations along the component, for example at respective end regions of the component.

The or each damping element may comprise a damping body, for example a cylindrical damping body. The or each damping element may comprise a plurality of damping bodies, which may be mounted to a common support.

The particular design of damping element will depend on the damping required. In some embodiments, the damping element may be a visco-elastic damping element.

The damping element may be suitably attached to the housing, to the component or indeed to the support mounted to either of these components as appropriate,

The mounting system can be used in any part of a projectile. Accordingly, the invention also provides a projectile as set forth in claim 14.

The mounting system may find particular application, however, in a tip portion of the projectile.

The component and mounting system may be embodied in an assembly which is mountable to the projectile.

The component may be any component which requires vibrational damping, but in various embodiments it may be an inertial measuring unit.

### BRIEF DESCRIPTION OF DRAWINGS

Figure 1 shows an electronic component mounted at the tip of a projectile;
Figure 2 shows the electronic component of Figure 1 in more detail;
Figure 3 shows the electronic component of Figure 2 in an exploded view; and
Figure 4 illustrates the deformation of the support of the electronic component.

### DETAILED DESCRIPTION

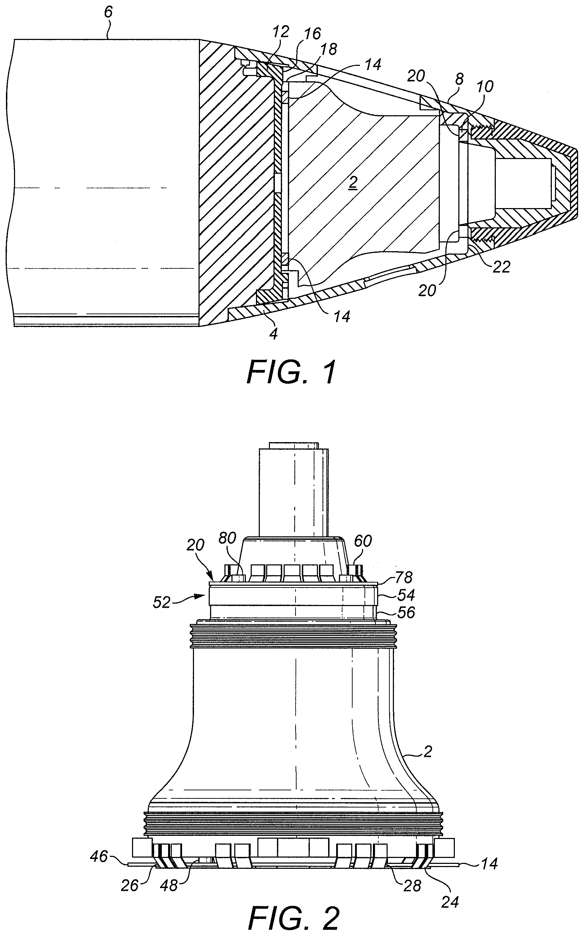

With reference to Figure 1, an electronic component 2 is shown mounted in an assembly 4 mounted to a tip end of a projectile 6..

In this embodiment, the electronic component may be an inertial measurement unit which may be used for navigational purposes. However, the disclosure is not limited to such and extends to other electronic components as well.

The component 2 is mounted within a housing 8 of the assembly 4. The housing 8 has an annular shoulder 10 and a base 12 axially spaced from the annular shoulder 10. The component 2 is mounted between the annular shoulder 10 and the base 12. In use, the component 2 must be isolated from any vibration experienced by the housing 8 and to this end is provided with a first damping element 14 arranged between opposed axially facing surfaces 16, 18 of the base 12 and component 2 and a second damping element 20 arranged between the annular shoulder 10 and an axially forward facing surface 22 of the component 2. This will, in use, isolate the component 2 from vibrations in the projectile and housing 8.

In this embodiment, the first and second damping elements 14, 20 are visco-elastic damping elements, for example silicone or polyurethane dampers. However, the damping elements need not be visco-elastic and can be of any other construction or material which will provide an anti-vibrational damping effect.

The dampers 14, 20 may creep under the weight of the component 2 when the projectile or assembly 4 is being stored etc., particularly if they are of a relatively soft material, for example a silicone or polyurethane elastomer. Accordingly, the assembly 4 is provided with an additional support for the component 2 which will relieve the dampers 14, 20 of the weight of the component 2. This may be regarded as "caging" the component during storage, etc.. Details of the support and its relationship to the dampers 14,20 will now be described in greater detail with reference to Figures 2 to 4.

With reference to Figure 2, the support comprises a first support element 24 which is mounted, for example bonded, to the axially facing surface 16 of the base 12 (shown in Figure 1). The first support element 24 is formed as a generally annular element comprising an annular base 26 and a plurality of fingers 28 extending axially away from the first support base 26. The annular base 26 is generally flat for engagement with the axially facing surface 16 of the base 12.

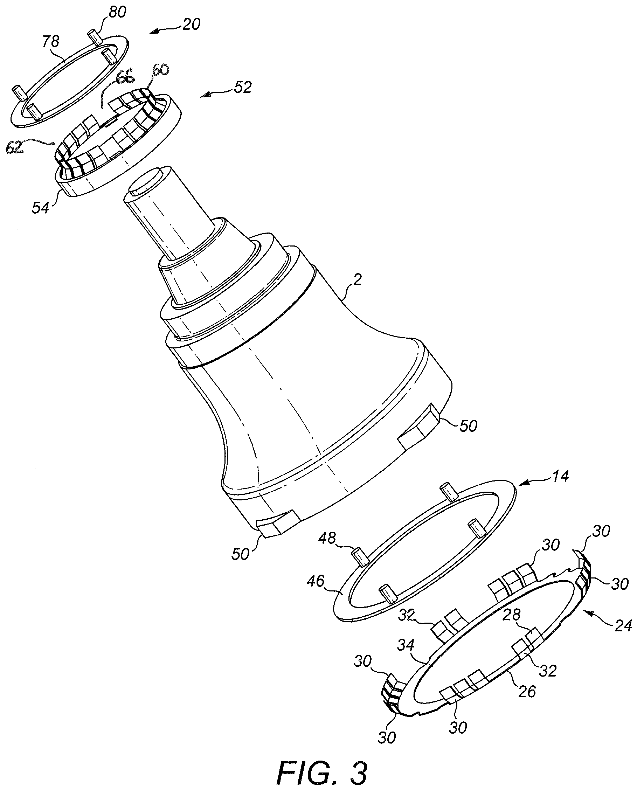

As will be seen from Figures 2 and 3, the fingers 28 are arranged axi-symmetrically circumferentially around the support base 26 in a plurality of groups. In this particular embodiment, the fingers 28 are arranged in six groups 30 each having three fingers 28 and two groups 32 of two fingers 28. Respective gaps 34 are formed between adjacent groups 30, 32 of fingers 28. The total number of fingers 28, the numbers of groups 30, 32 of fingers 28, and the number of fingers 28 in each group 30,32 and the arrangement of the groups can be chosen appropriately to the application and the component being supported.

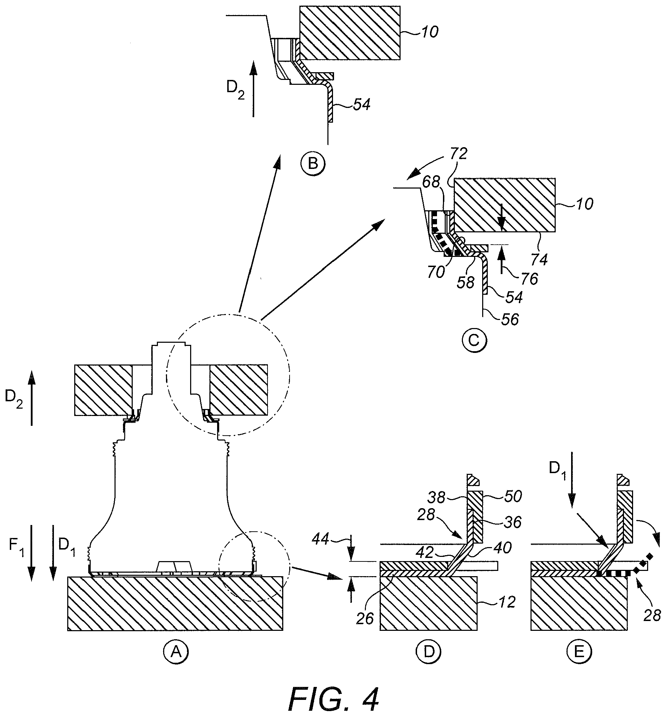

As can be seen from Figure 4, each finger 28 is bent in shape. The finger 28 has a first, generally axially extending portion 36 which surrounds an axially extending peripheral surface 38 of the component 2. The finger 28 further comprises an inclined second portion 40 joining the support base 26 to the axially extending portion 36. A lower edge 42 of the component 2 engages the inclined portion 40 such that at rest, an axial gap 44 is formed between the opposing axially facing surface 16,18 of the base 12 and the component 2.

As will be seen from Figures 2 and 3, the first damping element 14 is received on the annular base 26 of the first support 24. In this embodiment, the damper 14 comprises an annular base member 46 from which extend a number of, in this embodiment 4, circumferentially spaced cylindrical damping elements 48. The number of damping elements 48 and their arrangement may be varied, depending on the particular application. As can be seen in Figure 2, at rest, the damping elements 48 contact the axially facing surface 18 of the component 2. The base 46 of the damping element 14 may be secured to the first support 24 in any convenient manner, for example by bonding.

As can be seen from Figure 2, one end of the component 2 is received within the fingers 28. The circumferential position of the component 2 is maintained by a plurality of locating elements 50 which engage in respective gaps 34 between the groups 30,32 of fingers 28. Moreover, the damping element 14 is arranged such that the damping elements 48 are aligned with the gaps 34 between the groups of fingers 28 so as not to interfere with the deformation of the fingers 28.

The support further comprises a second support element 52 mounted on the axially facing surface 22 of the component 2 (shown in Figure 1). The second support element 52 is formed as a cap element, having a depending annular flange 54 which extends around an axially extending peripheral surface 56 of the component 2. It further comprises a planar annular base member 58 which sits on and is attached to the axially facing surface 22. A plurality of fingers 60 are arranged axi-symmetrically and extend axially away from the base member 58. In this embodiment, there are 4 groups 62 of 5 fingers. Respective gaps 66 are provided between adjacent respective groups 62 of fingers 28.

Similarly to the fingers 28 of the first support element 24, the fingers 60 of the second support element 52 comprise a first, generally axially extending portion 68 and a second, inclined portion 70 joining the first portion 68 to the annular base portion 58. As can be seen particularly in Figure 4, the axially extending portion 68 of each finger will engage inside and axially extending opening 72 defined by the housing shoulder 10, with an axially facing surface 74 of the shoulder 10 engaging the inclined portion 70 of each finger 60, thereby creating a gap 76 between the axially facing surface 74 of the shoulder 10 and the annular base portion 58.

The second damping element 20 is secured to the upper surface of the annular base portion 58 of the second supporting element 52 for example by bonding. As can be seen in Figure 3, similarly to the first damping element 14, the second damping element 20 comprises an annular base 78 and a plurality, in this embodiment 4, circumferentially spaced damping elements 80 extending axially away from the base 78. The number and spacing of the damping elements 80 may vary depending on the particular application. The damping elements 80 will contact the axially facing surface 74 of the housing shoulder 10 at rest.

Again the second damping element 20 is arranged such that the damping elements 48 do not to interfere with the deformation of the fingers 60.

The first and second support elements 24,52 are made from a deformable material, for example, a deformable metal. In this particular example, the support elements 24,52 are made from beryllium copper and have a thickness of approximately 0.3 mm. However, these are not limiting and the support elements may be made from any suitable material and have any suitable thickness which will allow the fingers 28,60 to deform as will be discussed further below. The support elements 24, 52 may be suitably constructed from a sheet material which is stamped and bent to the appropriate shape.

The first and second damping elements 14,20 may conveniently be moulded from an appropriate material, for example a silicone elastomer. It is not essential that the damping elements 14, 20 be formed as annular elements and a plurality of individual, un-connected elements could be provided. However by making the elements in one piece, their assembly and location in the construction is facilitated.

It will be understood from the above that when at rest, the support elements 24,52 support the component 2 in such a manner that no or minimal component weight, is transferred to the first and second dampers 14,20. The axially extending portions 36,68 of the fingers 28,60 support the component 2 in a radial direction, while the inclined portions 40,70 support the component 2 in an axial direction. In this situation, there is effectively no damping between the housing 8 and the component 2. However, that is not important since the component 2 is inoperative in these conditions and does not require damping.

In use, however, the component 2 must be vibrationally damped with respect to the housing 8. Therefore, the support provided by the first and second support elements 24,52 must be released to permit this damping. This is effected during launch or firing of the projectile 6.

With reference to Figure 4, it will be understood that during projectile launch, an inertial force F1 will be created by the component 2. This will cause the component 2 to move in a direction D1 relative to the housing 8. This movement will tend to close the gap 44 between the opposed axially facing surfaces 16, 18 of housing base 12 and the component 2. The movement also causes the axially facing surface 18 of the component 2 to urge outwardly the inclined portion 40 of the respective support fingers 28. The material and construction of the fingers is such that plastic deformation of the fingers will take place such that the fingers 28 will deform to the shape shown schematically in Figure 4E. From this it will be seen that the axially extending portions 36 of the fingers 28 have disengaged from the component 2 thereby releasing the component 2.

During the launch, a rebound effect occurs in combination with the release of elastic compression of the projectile after launch which means that the component 2 will then move axially forward in a direction D2. This movement of the component 2 moves the second support element 52 (which is mounted to the component 2) towards the housing shoulder 10, with the effect that the inclined portion 70 of the second fingers 60 engage the axially facing surface 74 of the housing shoulder 10 and deform inwardly to the position shown in Figure 4C. In this position, the axially extending sections 68 of the fingers disengage from the bore 72 of the housing shoulder 10, thereby releasing the upper end of the component 2.

In the steady state flight condition, therefore, the only support between the component 2 and the housing 8 is by means of the first and second dampers 14,20. The first and second supports 24,52 do not interfere with the damping effect of the dampers 14,20 at this time. The act of launching the projectile automatically releases the supports 24,52, requiring no external action by an operator.

It will be understood that the above is a description of a non-limiting example and that various modifications to the particular embodiment described may be made without departing from the scope of the disclosure.

For example, in certain embodiments, it may be possible to provide a deformable support at only one location on the component. However, generally two support elements 24, 52 will be provided at axially spaced locations on the component 2.

In addition, the support elements 24,52 may be mounted to either the housing 8 or the component 2 depending on the particular installation. What is important is that the interaction between the housing 8, component 2 and the support elements 24,52 during launch acts to release the support elements 24,52.

Also, the numbers of fingers 28, 60, and their grouping may be varied depending on any structural features which may have to be avoided and which might otherwise prevent them from deforming as intended. It may, however, be desirable to have an axi-symmetric arrangement so as to achieve uniform deformation.

While described in the context of supporting an inertial measurement unit, the disclosure is applicable to the support of other components as well.

## Claims

1. A mounting system for mounting an electronic component (2) in a housing (8), the mounting system comprising a damping element (14, 20) configured for damping the transmission of vibration from the housing (8) to the component (2) in use, and a support (24, 52) for supporting the component (2) in the housing (8); wherein the support is configured for supporting the component (2) in the housing (8) independently of the damping element (14, 20) such that the weight of the component (2) is substantially or completely removed from the damping element (14, 20), the support (24, 52) further being configured to be selectively releasable from the component (2) such that the component (2) is then supported only by the damping element (14, 20); **characterised in that** the support (24, 52) is configured to be collapsible or permanently deformable upon a predetermined movement of the component (2) relative to the housing (8) so as to release the component (2).

2. A mounting system as claimed in claim 1, wherein the support (24, 52) is configured to be collapsible or permanently deformable in an axial and/or radial direction.

3. A mounting system as claimed in claim 1 or 2, wherein the support comprises a first support element (24) which is deformable or collapsible in response to movement of the component (2) in a first direction (D1) relative to the housing (8) and a second support element (52) which is deformable or collapsible in response to movement of the component (2) in a second, opposite direction (D2) relative to the housing (8).

4. A mounting system as claimed in claim 3, wherein first and second support elements (24, 52) are spaced apart axially along the component (2), the first support element (24) being collapsible in response to movement of the component (2) in the first direction (D1) and the second support element (52) being collapsible in response to movement of the component (2) in the second direction (D2).

5. A mounting system as claimed in claim 4, wherein the respective support elements (24, 52) are arranged at respective axial ends of the component (2).

6. A mounting system as claimed in any preceding claim, wherein the support (24, 52) comprises a plurality of fingers (28, 60) which engage and support the component (2), but which are plastically deformed upon the movement of the component (2) by the predetermined amount.

7. A mounting system as claimed in claim 6, wherein the fingers (28, 60) are configured to be deformed either radially inwardly or outwardly, optionally the fingers (28) of one support element (24) deforming radially outwardly and the fingers (60) of a second support element (52) deforming radially inwardly.

8. A mounting system as claimed in claim 6 or 7, wherein the fingers (28, 60) are mounted to a common base element (26, 58) which is mounted either to the housing (8) or to the component (2), the fingers (28, 60) optionally being arranged in a circumferential array around the base element (26, 58), the array optionally being axi-symmetrical.

9. A mounting system as claimed in any of claims 6 to 8, wherein the fingers (28, 60) have a bent shape with a first, generally axially extending portion (36, 68) for engaging a radially facing surface (38, 72) of the component (2) or the housing (8), and an inclined portion (40, 70) engaging an axially facing surface or edge (16, 74), of the component (2) or housing (8).

10. A mounting system as claimed in any preceding claim, wherein the damping element (14, 20) is disposed between opposed axially facing surfaces (16, 18, 20, 22) of the housing (8) and the component (2).

11. A mounting system as claimed in claim 10, comprising first and second damping elements (14, 20) provided at axially spaced locations along the component (2).

12. A mounting system as claimed in any preceding claim, wherein the damping element (14, 20) comprises a plurality of damping bodies (48, 80), optionally mounted to a common support (46, 78).

13. A mounting system as claimed in any preceding claim, wherein the damping element is a visco-elastic damping element.

14. A projectile (6) comprising a mounting system as claimed in any preceding claim, the launching of the projectile (6) acting to release the support (24, 52) from the component (2).

15. A projectile as claimed in claim 14, wherein the mounting system is fitted to a tip portion of the projectile (6).

## Patentansprüche

1. Montagesystem zum Montieren einer elektrischen Komponente (2) in einem Gehäuse (8), wobei das Montagesystem ein Dämpfungselement (14, 20), das dazu konfiguriert ist, die Übertragung von Schwingung von dem Gehäuse (8) an die Komponente (2) bei Nutzung zu dämpfen, und eine Stützstruktur (24, 52) umfasst, die die Komponente (2) in dem Gehäuse (8) stützt; wobei die Stützstruktur dazu konfiguriert ist, die Komponente (2) in dem Gehäuse (8) unabhängig von dem Dämpfungselement (14, 20) zu stützen, sodass das Gewicht der Komponente (2) im Wesentlichen oder komplett von dem Dämpfungselement (14, 20) entfernt wird, wobei die Stützstruktur (24, 52) ferner dazu konfiguriert ist, wahlweise von der Komponente (2) lösbar zu sein, sodass die Komponente (2) dann nur durch das Dämpfungselement (14, 20) gestützt wird; **dadurch gekennzeichnet, dass** die Stützstruktur (24,52) dazu konfiguriert ist, faltbar oder bei einer vorherbestimmten Bewegung der Komponente (2) in Bezug auf das Gehäuse (8) permanent verformbar zu sein, um die Komponente (2) freizugeben.

2. Montagesystem nach Anspruch 1, wobei die Stützstruktur (24, 52) dazu konfiguriert ist, in einer axialen und/oder radialen Richtung faltbar oder permanent verformbar zu sein.

3. Montagesystem nach Anspruch 1 oder 2, wobei die Stützstruktur ein erstes Stützelement (24), das als Reaktion auf eine Bewegung der Komponente (2) in eine erste Richtung (D1) in Bezug auf das Gehäuse (8) faltbar oder verformbar ist, und ein zweites Stützelement (52) umfasst, das als Reaktion auf eine Bewegung der Komponente (2) in eine zweite, entgegengesetzte Richtung (D2) in Bezug auf das Gehäuse (8) faltbar oder verformbar ist.

4. Montagesystem nach Anspruch 3, wobei das erste und das zweite Stützelement (24, 52) entlang der Komponente (2) axial voneinander beabstandet sind, wobei das erste Stützelement (24) als Reaktion auf die Bewegung der Komponente (2) in die erste Richtung (D1) faltbar ist und wobei das zweite Stützelement (52) als Reaktion auf die Bewegung der Komponente (2) in die zweite Richtung (D2) faltbar ist.

5. Montagesystem nach Anspruch 4, wobei die entsprechende Stützelemente (24, 52) an dem entsprechenden axialen Ende der Komponente (2) angeordnet sind.

6. Montagesystem nach einem der vorhergehenden Ansprüche, wobei die Stützstruktur (24, 52) eine Vielzahl an Fingern (28, 60) umfasst, die in die Komponente (2) eingreifen und diese stützen, aber die bei der Bewegung der Komponente (2) durch das vorbestimmte Maß verformt sind.

7. Montagesystem nach Anspruch 6, wobei die Finger (28, 60) dazu konfiguriert sind, entweder radial nach innen oder nach außen verformt zu werden, wobei sich die Finger (28) eines Stützelements (24) gegebenenfalls radial nach außen verformen und sich die Finger (60) eines zweiten Stützelements (52) gegebenenfalls radial nach innen verformt.

8. Montagesystem nach Anspruch 6 oder 7, wobei die Finger (28, 60) an ein gemeinsames Grundelement (26, 58) montiert sind, das entweder an das Gehäuse (8) oder an die Komponente (2) montiert ist, wobei die Finger (28, 60) gegebenenfalls in einer Umfangsgruppierung um das Basiselement (26, 58) herum angeordnet sind, wobei die Gruppierung gegebenenfalls achsensymmetrisch ist.

9. Montagesystem nach einem der Ansprüche 6 bis 8, wobei die Finger (28, 60) eine gebogene Form mit einem ersten, sich im Allgemeinen axial erstreckenden Abschnitt (36, 68) zum Ineingriffbringen mit einer radial gewandten Fläche (38, 72) der Komponente (2) oder des Gehäuses (8) und einen geneigten Abschnitt (40, 70) aufweisen, der in Eingriff mit einer axial gewandten Fläche oder Kante (16, 74) der Komponente (2) oder des Gehäuses (8) steht.

10. Montagesystem nach einem der vorhergehenden Ansprüche, wobei das Dämpfungselement (14, 20) zwischen den gegenüberliegenden axial gewandten Flächen (16, 18, 20, 22) des Gehäuses (8) und der Komponente (2) angeordnet ist.

11. Montagesystem nach Anspruch 10, das ein erstes und zweites Dämpfungselement (14, 20) umfasst, die an axial beabstandeten Stellen entlang der Komponente (2) bereitgestellt sind.

12. Montagesystem nach einem der vorhergehenden Ansprüche, wobei das Dämpfungselement (14, 20) eine Vielzahl an Dämpfungskörpern (48, 80) umfasst, die gegebenenfalls an eine gemeinsame Stützstruktur (46, 78) montiert sind.

13. Montagesystem nach einem der vorhergehenden Ansprüche, wobei das Dämpfungselement ein viskoelastisches Dämpfungselement ist.

14. Projektil (6), das ein Montagesystem nach einem der vorhergehenden Ansprüche umfasst, wobei das Einführen des Projektils (6) bewirkt, dass die Stützstruktur (24, 52) von der Komponente (2) gelöst wird.

15. Projektil nach Anspruch 14, wobei das Montagesystem an einen Spitzenabschnitt des Projektils (6) angepasst ist.

## Revendications

1. Système de montage pour monter un composant électronique (2) dans un boîtier (8), le système de montage comprenant un élément amortisseur (14, 20) configuré pour amortir la transmission de vibrations du boîtier (8) au composant (2) en cours d'utilisation, et un support (24, 52) pour supporter le composant (2) dans le boîtier (8) ; dans lequel le support est configuré pour supporter le composant (2) dans le boîtier (8) indépendamment de l'élément amortisseur (14, 20) de sorte que le poids du composant (2) est sensiblement ou complètement retiré de l'élément amortisseur (14, 20), le support (24, 52) étant en outre configuré pour pouvoir être libéré sélectivement du composant (2) de sorte que le composant (2) est ensuite supporté uniquement par l'élément amortisseur (14, 20) ; **caractérisé en ce que** le support (24, 52) est configuré pour être pliable ou déformable en permanence lors d'un mouvement prédéterminé du composant (2) par rapport au boîtier (8) de manière à libérer le composant (2).

2. Système de montage selon la revendication 1, dans lequel le support (24, 52) est configuré pour être pliable ou déformable en permanence dans une direction axiale et/ou radiale.

3. Système de montage selon la revendication 1 ou 2, dans lequel le support comprend un premier élément de support (24) qui est déformable ou pliable en réponse à un mouvement du composant (2) dans une première direction (D1) par rapport au boîtier (8) et un second élément de support (52) qui est déformable ou pliable en réponse à un mouvement du composant (2) dans une seconde direction (D2) opposée par rapport au boîtier (8).

4. Système de montage selon la revendication 3, dans lequel les premier et second éléments de support (24, 52) sont espacés axialement l'un de l'autre le long du composant (2), le premier élément de support (24) étant pliable en réponse à un mouvement du composant (2) dans la première direction (D1) et le second élément de support (52) étant pliable en réponse à un mouvement du composant (2) dans la seconde direction (D2) .

5. Système de montage selon la revendication 4, dans lequel les éléments de support (24, 52) respectifs sont agencés à des extrémités axiales respectives du composant (2).

6. Système de montage selon une quelconque revendication précédente, dans lequel le support (24, 52) comprend une pluralité de doigts (28, 60) qui viennent en prise avec le composant (2) et le supportent, mais qui sont déformés plastiquement lors du mouvement du composant (2) selon la valeur prédéterminée.

7. Système de montage selon la revendication 6, dans lequel les doigts (28, 60) sont configurés pour être déformés radialement vers l'intérieur ou vers l'extérieur, les doigts (28) d'un élément de support (24) se déformant éventuellement radialement vers l'extérieur et les doigts (60) d'un second élément de support (52) se déformant éventuellement radialement vers l'intérieur.

8. Système de montage selon la revendication 6 ou 7, dans lequel les doigts (28, 60) sont montés sur un élément de base commun (26, 58) qui est monté sur le boîtier (8) ou sur le composant (2), les doigts (28, 60) étant éventuellement agencés en un réseau circonférentiel atour de l'élément de base (26, 58), le réseau étant éventuellement axi-symétrique.

9. Système de montage selon l'une quelconque des revendications 6 à 8, dans lequel les doigts (28, 60) ont une forme courbée avec une première partie s'étendant généralement axialement (36, 68) pour venir en prise avec une surface orientée radialement (38, 72) du composant (2) ou du boîtier (8) et une partie inclinée (40, 70) venant en prise avec une surface ou un bord orienté(e) axialement (16, 74) du composant (2) ou du boîtier (8).

10. Système de montage selon une quelconque revendication précédente, dans lequel l'élément amortisseur (14, 20) est disposé entre des surfaces opposées orientées axialement (16, 18, 20, 22) du boîtier (8) et du composant (2).

11. Système de montage selon la revendication 10, comprenant des premier et second éléments amortisseur (14, 20) prévus à des emplacements espacés axialement le long du composant (2).

12. Système de montage selon une quelconque revendication précédente, dans lequel l'élément amortisseur (14, 20) comprend une pluralité de corps amortisseur (48, 80) éventuellement montés sur un support commun (46, 78).

13. Système de montage selon une quelconque revendication précédente, dans lequel l'élément amortisseur est un élément amortisseur visco-élastique.

14. Projectile (6) comprenant un système de montage selon une quelconque revendication précédente, le lancement du projectile (6) permettant de libérer le support (24, 52) du composant (2).

15. Projectile selon la revendication 14, dans lequel le système de montage est fixé à une partie d'extrémité du projectile (6).
